# DEMANDE DE BREVET EUROPEEN

(11) **EP 1 403 198 A1**
(43) Date de publication de la demande: **31.03.2004**
(21) Numéro de dépôt: 03292337.7
(22) Date de dépôt: 21.09.2003
(51) Int. Cl.: B65G 65/48, A01K 5/02

(54) **Distributeur automatique de produit granulaire, notamment de produit alimentaire pour animaux**

(30) Priorité: 27.09.2002 FR 0211984
(71) Demandeur: Meakom Innovations, 18400 Saint-Florent-sur-Cher (FR)
(72) Inventeur: Mealares, Claude, 18000 Bourges (FR)
(74) Mandataire: Lemoine, Robert

(57) **Abrégé**

La présente invention concerne un distributeur automatique de produit granulaire, notamment de produit alimentaire pour animaux, qui comprend une trémie (1) destinée à contenir le produit granulaire (2) à distribuer, un tambour (3) monté rotatif au niveau de la sortie de la trémie et pourvu d'au moins une cavité (4) destinée à recevoir une quantité prédéterminée de produit, un organe moteur pour faire tourner le tambour afin que celui-ci évacue de la trémie le produit contenu dans sa cavité, et un programmateur pour régler la durée et la périodicité de fonctionnement de l'organe moteur.

un élément souple (8) adjacent à la surface latérale du tambour et apte à se déformer pendant la rotation de celui-ci sous l'action du produit (2) contenu dans la cavité (4) est prévu au niveau de la sortie de la trémie (1), côté extraction.

## Description

La présente invention concerne un distributeur automatique de produit granulaire, notamment de produit alimentaire pour animaux.

Les distributeurs de produits alimentaires pour animaux qui sont actuellement disponibles sur le marché ont une structure compliquée et sont d'un coût relativement élevé. Ils délivrent en outre des quantités d'aliments souvent peu précises et sont sujets à *des pannes assez fréquentes*.

La présente invention se propose plus particulièrement de remédier à ces inconvénients et, pour ce faire, elle a pour objet un distributeur automatique de produit granulaire, notamment de produit alimentaire pour animaux, qui est caractérisé en ce qu'il comprend une trémie destinée à contenir le produit granulaire à distribuer et pourvue d'une sortie pour celui-ci, un tambour monté rotatif au niveau de la sortie de la trémie et dont la surface latérale est pourvue d'au moins une cavité destinée à recevoir une quantité prédéterminée de produit granulaire, un organe moteur pour entraîner en rotation le tambour afin que celui-ci évacue de la trémie le produit granulaire contenu dans sa cavité, et un programmateur pour régler la durée et la périodicité de fonctionnement de l'organe moteur.

Le distributeur selon l'invention a été mis au point pour nourrir des chiens et des chats dont les propriétaires sont absents ou peu disponibles.

Il est parfaitement adapté pour distribuer des granulés et des croquettes destinés à ces animaux. Il va de soi cependant qu'il pourrait être utilisé pour distribuer d'autres produits secs se présentant sous forme de grains ou de petits morceaux.

Grâce à son programmateur, le distributeur selon l'invention peut délivrer une quantité prédéterminée de produit à des moments plus ou moins espacés dans le temps.

Il permet donc d'alimenter des animaux de tailles différentes en délivrant des quantités d'aliment appropriées.

*De préférence*, le distributeur selon l'invention comprend, au niveau de la sortie de la trémie, côté extraction du produit granulaire, un élément souple adjacent à la surface latérale du tambour et apte à se déformer pendant la rotation de celui-ci sous l'action du produit granulaire contenu dans la cavité.

Les risques pour que le produit granulaire bloque le tambour sont éliminés. En effet, les granulés qui ne sont que partiellement logés dans la cavité du tambour n'empêchent pas celui-ci de tourner puisque l'élément souple peut s'escamoter lors de leur passage devant lui.

Selon un mode de réalisation préféré, l'élément souple est constitué par une brosse dont les poils s'appuient contre la surface latérale du tambour.

En variante, l'élément souple peut être constitué par un matériau en mousse s'appuyant contre la surface latérale du tambour.

Il peut en particulier se présenter sous la forme d'un cylindre monté libre en rotation et s'appuyant contre le tambour. Dans ce cas, son usure sous l'action du frottement du produit granulaire peut être évitée. En effet, comme le tambour l'entraîne avec lui en rotation, le produit granulaire n'est pas toujours en contact avec les mêmes parties de sa surface.

Le distributeur peut avantageusement comprendre un deuxième élément souple constitué par un deuxième cylindre, lequel est symétrique du cylindre existant par rapport au plan vertical contenant l'axe longitudinal du tambour, l'organe moteur étant apte à entraîner en rotation le tambour dans les deux sens.

Lorsque le produit granulaire occasionne un blocage intempestif du tambour, sa distribution peut toutefois être assurée en faisant tourner le tambour dans le sens inverse.

L'organe moteur du distributeur selon l'invention peut par ailleurs être un motoréducteur et comprendre un moteur électrique alimenté par une pile, une batterie ou le secteur.

Quant au tambour, il est de préférence réalisé en un matériau rigide.

Selon un mode de réalisation particulier, le tambour pourrait cependant être constitué de poils ou de lamelles souples délimitant au moins une cavité destinée à recevoir le produit granulaire.

Trois modes d'exécution de la présente invention seront décrits ci-après à titre d'exemples nullement limitatifs en référence aux dessins annexés dans lesquels :
- la figure 1 est une vue en coupe schématique d'un distributeur conforme à l'invention ;
- la figure 2 est une vue en coupe selon la ligne II-II de la figure 1 ;
- la figure 3 est une vue partielle analogue à la figure 2, qui représente un autre distributeur conforme à l'invention ;
- la figure 4 est une vue partielle analogue à la figure 2, qui représente encore un autre distributeur conforme à l'invention ; et
- la figure 5 est une vue partielle analogue à la figure 2, qui représente un distributeur conforme à l'invention comportant un tambour particulier.

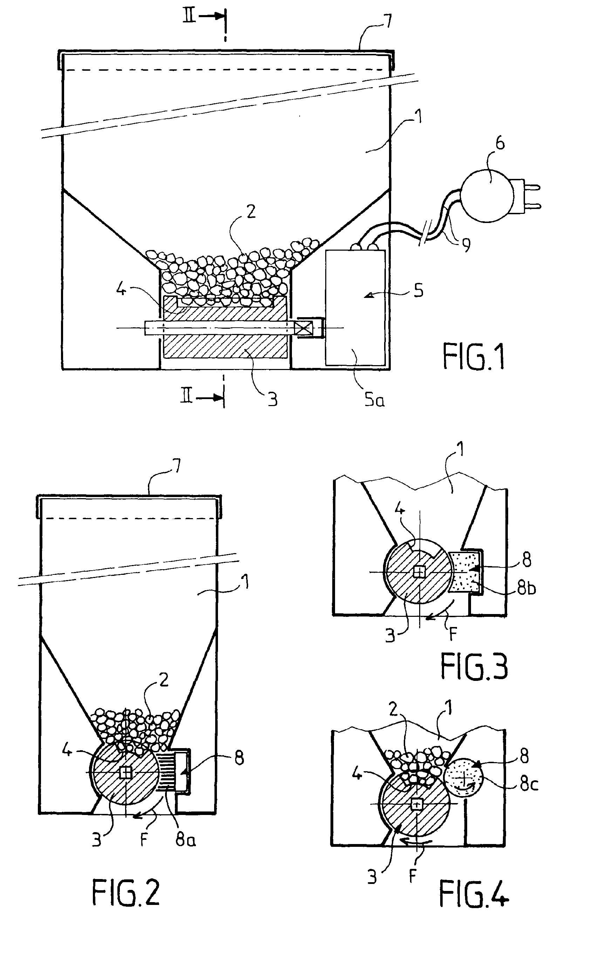

Les distributeurs représentés sur les figures 1 à 4 ont été mis au point pour distribuer automatiquement des granulés ou des croquettes destinés à l'alimentation des chiens et/ou des chats.

Ils pourraient cependant être utilisés pour distribuer tous produits secs sous forme de grains ou de morceaux, par exemple, des graines pour poissons ou animaux de basse-cour, des granulés de traitement d'eau, etc...

Chaque distributeur comprend une trémie 1 contenant le produit granulaire 2 à distribuer et pourvue d'une sortie à sa partie inférieure, un tambour 3 monté rotatif au niveau de la sortie de la trémie et dont la surface latérale est pourvue d'une cavité 4 destinée à recevoir une quantité prédéterminée de produit granulaire, un organe moteur 5 destiné à faire tourner le tambour dans le sens de la flèche F afin qu'à chaque rotation, celui-ci extrait de la trémie le produit contenu dans sa cavité, et un programmateur 6 permettant de régler la durée et la périodicité de fonctionnement de l'organe moteur.

On notera ici que la trémie 1 des distributeurs comporte avantageusement un couvercle 7 empêchant un accès non autorisé au produit 2 et protégeant ce dernier contre l'humidité.

Afin d'augmenter la capacité des distributeurs, une rehausse (non représentée) pourrait être insérée entre la trémie et le couvercle.

Au niveau de la sortie de leur trémie 1, les distributeurs comprennent, côté extraction du produit granulaire, un élément souple 8 adjacent à la surface latérale du tambour 3 et apte à se déformer pendant la rotation de celui-ci sous l'action du produit granulaire contenu dans la cavité 4 mais faisant légèrement saillie hors de celle-ci.

Dans l'exemple représenté sur la figure 2, l'élément souple 8 est constitué par une brosse 8a dont les poils s'appuient contre la surface latérale du tambour 3.

Dans l'exemple représenté sur la figure 3, l'élément souple 8 est constitué par un matériau en mousse 8b s'appuyant contre la surface latérale du tambour.

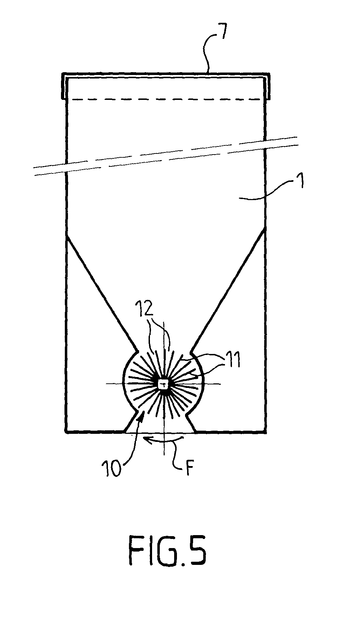

Comme représenté sur la figure 4, l'élément souple 8 peut avantageusement se présenter sous la forme d'un cylindre 8c monté libre en rotation et s'appuyant contre le tambour 3.

Il ressort clairement des figures 2 à 4 que le produit granulaire 2 contenu dans la cavité 4 du tambour 3 ne risque pas d'empêcher celui-ci de tourner dans le sens de la flèche F. En effet, pendant la rotation du tambour, ce produit déforme les poils de la brosse 8a, le matériau en mousse 8b ou le cylindre 8c et peut ainsi sortir sans problème de la trémie 1 en passant entre le tambour et l'élément souple.

Le distributeur représenté sur la figure 4 a un avantage sur le distributeur visible sur la figure 3 ; comme son cylindre 8c est entraîné en rotation par le tambour lors de la distribution du produit granulaire, celui-ci n'est jamais en contact avec les mêmes parties de sa surface et ne provoque donc pas son usure.

On indiquera par ailleurs que l'organe moteur 5 prévu pour faire tourner le tambour 3 dans le sens de la flèche F est de préférence un motoréducteur 5a et peut comprendre un moteur électrique relié à une pile, à une batterie ou au secteur par des fils électriques 9.

Le programmateur 6 qui est connecté aux fils 9 de manière conventionnelle permet bien entendu de distribuer le produit granulaire selon n'importe quelle périodicité.

Ainsi, la distribution pourrait par exemple être effectuée à une heure choisie dans la journée, plusieurs fois par jour à des heures déterminées, à certains moments dans la semaine, etc...

Il suffit en effet pour ce faire de régler judicieusement le programmateur qui est connu en soi.

La quantité de produit distribuée dépend bien entendu de la durée pendant laquelle le programmateur permet au tambour de tourner.

Dans l'exemple représenté sur les figures 1 à 4, le tambour ne comporte qu'une seule cavité 4. Il pourrait cependant comporter deux cavités ou davantage afin de permettre une distribution de produit granulaire plus importante et/ou plus rapide.

Si la cavité 4 est trop grande pour permettre une distribution précise d'une faible quantité de produit granulaire, il est possible de réduire ses dimensions à l'aide de cales amovibles l'obturant partiellement.

On précisera par ailleurs que les tambours représentés sur les figures 1 à 4 sont réalisés en un matériau rigide, par exemple en métal ou en matière plastique.

En se référant maintenant à la figure 5, on notera que le distributeur représenté sur cette figure comprend un tambour 10 constitué de poils ou de lamelles souples 11 délimitant plusieurs cavités 12 destinées chacune à recevoir le produit granulaire à distribuer.

Dans ce mode de réalisation, la brosse 8a, le matériau en mousse 8b et le cylindre 8c pourraient bien entendu être remplacés ar un matériau conventionnel rigide.

Il ressort des observations précédentes que les distributeurs selon l'invention fonctionnent de manière fiable, sans risque de blocage de leur tambour par le produit granulaire, et sont capables de distribuer des quantités précises de produit granulaire selon un rythme qui peut être choisi en fonction des besoins à satisfaire.

Les distributeurs représentés sur les figures 1 à 4 comportent un seul élément souple 8 car leur tambour 3 est destiné à tourner dans un seul sens.

Ils pourraient cependant comporter un deuxième élément souple 8 symétrique de l'élément existant par rapport au plan vertical contenant l'axe longitudinal du tambour si celui-ci était susceptible de tourner dans les deux sens.

## Revendications

1. Distributeur automatique de produit granulaire, notamment de produit alimentaire pour animaux, comprenant une trémie (1) destinée à contenir le produit granulaire (2) à distribuer et pourvue d'une sortie pour celui-ci, un tambour (3 ; 10) monté rotatif au niveau de la sortie de la trémie et dont la surface latérale est pourvue d'au moins une cavité (4 ; 12) destinée à recevoir une quantité prédéterminée de produit granulaire, un organe moteur (5) pour entraîner en rotation le tambour afin que celui-ci évacue de la trémie le produit granulaire contenu dans sa cavité, un programmateur (6) pour régler la durée et la périodicité de fonctionnement de l'organe moteur, et un élément souple (8) situé au niveau de la sortie de la trémie (1), côté extraction du produit granulaire (2), cet élément souple (8) étant adjacent à la surface latérale du tambour (3 ; 10) et apte à se déformer pendant la rotation de celui-ci sous l'action du produit granulaire (2) contenu dans la cavité (4 ; 12), **caractérisé en ce que** l'élément souple (8) est un cylindre (8c) monté libre en rotation et s'appuyant contre le tambour (3).

2. Distributeur selon la revendication 1, **caractérisé en ce que** le cylindre (8c) est réalisé en un matériau en mousse.

3. Distributeur selon la revendication 1 ou 2, **caractérisé en ce qu'**il comprend un deuxième élément souple (8) constitué par un deuxième cylindre, lequel est symétrique du cylindre existant (8c) par rapport au plan vertical contenant l'axe longitudinal du tambour (3), l'organe moteur (5) étant apte à entraîner en rotation le tambour dans les deux sens.

4. Distributeur selon l'une quelconque des revendications 1 à 3, **caractérisé en ce que** le tambour (10) est constitué de poils délimitant au moins une cavité (12) destinée à recevoir le produit granulaire (2).
